# EUROPÄISCHE PATENTANMELDUNG

(11) **EP 4 707 136 A1**
(43) Veröffentlichungstag der Anmeldung: **11.03.2026**
(21) Anmeldenummer: 24198449.1
(22) Anmeldetag: 04.09.2024
(51) Int. Cl.: B62D 25/20, B62D 33/04

(54) **FAHRZEUGAUFBAU UND FAHRZEUG**

(71) Anmelder: Schmitz Cargobull AG, 48341 Altenberge (DE)
(72) Erfinder: WEGENER, Jens, 48329 Havixbeck (DE); SÖLLER, Patrick, 48739 Legden (DE); VEENSTRA, Uwe, 48683 Ahaus (DE); RESING, Dirk, 46354 Südlohn-Oeding (DE); SIERRA ALMENARA, David, 48149 Münster (DE); WESTHOFF, Ludger, 46354 Südlohn (DE)
(74) Vertreter: Liedtke & Partner Patentanwälte

(57) **Zusammenfassung**

Die Erfindung betrifft einen Fahrzeugaufbau (1), insbesondere für ein Nutzfahrzeug, aufweisend
- zumindest einen Ladeboden (2),
- eine senkrecht zu dem Ladeboden (2) verlaufende erste Seitenwand (4),
- eine senkrecht zu dem Ladeboden (2) verlaufende und der ersten Seitenwand (4) gegenüberliegende zweite Seitenwand (5),
- zumindest jeweils zwei an jeder Seitenwand (4, 5) angeordnete, zumindest im Wesentlichen parallel zueinander verlaufende und von einer Ladefläche des Ladebodens (2) zumindest im Wesentlichen senkrecht nach oben gerichtete Befestigungsschienen (8.1 bis 8.n),
- zumindest zwei Querträger (6, 7), welche jeweils derart an einem Ende mit einer an der ersten Seitenwand (4) angeordneten Befestigungsschiene (8.1 bis 8.n) und an dem gegenüberliegenden anderen Ende mit einer an der zweiten Seitenwand (5) angeordneten Befestigungsschiene (8.1 bis 8.n) befestigbar oder befestigt sind, dass die Querträger (6, 7) parallel zueinander angeordnet sind, und
- zumindest ein Zwischenbodenelement (10), welches derart an den zumindest zwei Querträgern (6, 7) befestigbar oder befestigt ist, dass dieses beabstandet zu dem Ladeboden (2) und zumindest im Wesentlichen parallel zu diesem zwischen den beiden Seitenwänden (4, 5) verläuft.

Die Erfindung betrifft weiterhin ein Fahrzeug, insbesondere Nutzfahrzeug, aufweisend zumindest einen solchen Fahrzeugaufbau (1).

## Beschreibung

Die Erfindung betrifft einen Fahrzeugaufbau.

Die Erfindung betrifft weiterhin ein Fahrzeug.

Aus dem Stand der Technik sind allgemein Nutzfahrzeuge bekannt, deren Laderäume in mehrere übereinander angeordnete Ladeebenen unterteilt sind.

Der Erfindung liegt die Aufgabe zu Grunde einen neuartigen Fahrzeugaufbau und ein neuartiges Fahrzeug anzugeben.

Die Aufgabe wird erfindungsgemäß gelöst durch einen Fahrzeugaufbau, welcher die im Anspruch 1 angegebenen Merkmale aufweist, und durch ein Fahrzeug, welches die im Anspruch 15 angegebenen Merkmale aufweist.

Vorteilhafte Ausgestaltungen der Erfindung sind Gegenstand der abhängigen Ansprüche.

Der erfindungsgemäße Fahrzeugaufbau, insbesondere für ein Nutzfahrzeug, weist auf:
- zumindest einen Ladeboden,
- eine senkrecht zu dem Ladeboden verlaufende erste Seitenwand,
- eine senkrecht zu dem Ladeboden verlaufende und der ersten Seitenwand gegenüberliegende zweite Seitenwand,
- zumindest jeweils zwei an jeder Seitenwand angeordnete, zumindest im Wesentlichen parallel zueinander verlaufende und von einer Ladefläche des Ladebodens zumindest im Wesentlichen senkrecht nach oben gerichtete Befestigungsschienen,
- zumindest zwei Querträger, welche jeweils derart an einem Ende mit einer an der ersten Seitenwand angeordneten Befestigungsschiene und an dem gegenüberliegenden anderen Ende mit einer an der zweiten Seitenwand angeordneten Befestigungsschiene befestigbar oder befestigt sind, dass die Querträger parallel zueinander angeordnet sind, und
- zumindest ein Zwischenbodenelement, welches derart an den zumindest zwei Querträgern befestigbar oder befestigt ist, dass dieses beabstandet zu dem Ladeboden und zumindest im Wesentlichen parallel zu diesem zwischen den beiden Seitenwänden verläuft.

Unter einer Seitenwand werden vorliegend sowohl geschlossene massive Seitenwände als auch unterbrochene rahmenförmige Seitenwände verstanden. Die rahmenförmigen Seitenwände können dabei eine Plane zum Verschluss von Öffnungen des Rahmens aufweisen.

Der vorliegende Fahrzeugaufbau zeichnet sich durch eine Nutzung der Befestigungsschienen, Querträger und des zumindest einen Zwischenbodenelements durch eine besonders große Flexibilität in seiner Nutzbarkeit aus. Insbesondere ist es möglich, bereits im Fahrzeugaufbau vorhandene und in den Befestigungsschienen, auch als Doppelstockschienen bezeichnet, befestigbare Querträger, auch als Doppelstockbalken bezeichnet, zu nutzen, um zumindest eine weitere, planparallel zu dem Ladenboden verlaufende Ladeebene zu erzeugen. Auf zwei jeweils in den Befestigungsschienen benachbart und parallel angeordneten Querträgern sind dann in bekannter Weise Ladegutbehälter und/oder Transportpaletten mit normierter Größe, beispielsweise so genannte Euro-Paletten, anordbar. Die zusätzliche Möglichkeit, zumindest ein Zwischenbodenelement auf den zwei an den Befestigungsschienen benachbart und parallel angeordneten Querträgern sicher zu befestigen, führt dazu, dass auch Güter, welche nicht in auf den Querträgern positionierbaren Ladegutbehältern oder auf Transportpaletten gelagert sind, in der zumindest einen weiteren Ladeebene transportiert werden können. Das heißt, es kann mittels der zumindest einen weiteren Ladeebene in besonders vorteilhafter Weise oberhalb und beabstandet zu dem Ladeboden des Fahrzeugaufbaus ein zweiter, insbesondere planparallel zu dem Ladeboden verlaufender zweiter Ladeboden geschaffen werden. Dies ermöglicht, dass unterhalb des zweiten Ladebodens beispielsweise Transportgüter gelagert werden können, auf welche keine weiteren Transportgüter gestapelt werden können. Auf dem zweiten Ladeboden können dann weitere Transportgüter gelagert werden, so dass eine Höhenausnutzung des Laderaums maximiert werden kann. Dabei ist die zweite Ladeebene aufgrund der Verwendung der Befestigungsschienen, Querträger und des zumindest einen Zwischenbodenelements mit besonders geringem Aufwand sowohl für Ladegutbehälter und/oder Transportpaletten mit normierter Größe als auch für anders gelagerte Güter realisierbar. Die Nutzung der Querträger als "Unterlage" für das zumindest eine Zwischenbodenelement ermöglicht dabei in besonders vorteilhafter Weise, dass keine auf den unteren Ladeboden führende Mittelabstützung unterhalb der erzeugten weiteren Ladeebene erforderlich ist, so dass ein Laderaum unterhalb der weiteren Ladeebene nicht eingeschränkt ist.

In einer möglichen Ausgestaltung des Fahrzeugaufbaus ist das zumindest eine Zwischenbodenelement einteilig ausgebildet. Diese einteilige Ausbildung ermöglicht einerseits eine einfache Lagerung des Zwischenbodenelements während dessen Nicht-Nutzung, insbesondere innerhalb des Fahrzeugaufbaus. Gleichzeitig sind eine Handhabung des Zwischenbodenelements sowie die Erstellung der zumindest einen weiteren Ladeebene durch die einteilige Ausbildung des Zwischenbodenelements sehr einfach.

In einer weiteren möglichen Ausgestaltung des Fahrzeugaufbaus
- weist das zumindest eine Zwischenbodenelement an einem Ende zumindest eine Schwenk-Befestigungsvorrichtung auf, mittels welcher dieses um eine parallel zum Ladeboden verlaufende Seitenwand-Schwenkachse schwenkbar an der ersten Seitenwand oder der zweiten Seitenwand und/oder zwei nebeneinander angeordneten Befestigungsschienen befestigt oder befestigbar ist, und
- ist das zumindest eine Zwischenbodenelement ausgehend von einer Verstauposition, in welcher dieses mit seiner Oberseite zur jeweiligen Seitenwand, an welcher dieses befestigt ist, gerichtet und zumindest im Wesentlichen parallel angeordnet ist, in eine Nutzposition, in welcher dieses mit seiner Unterseite zumindest abschnittsweise auf den Querträgern aufliegt, um die Seitenwand-Schwenkachse nach unten schwenkbar.

Diese Schwenkbarkeit bzw. Klappbarkeit des zumindest einen Zwischenbodenelements ermöglicht einerseits eine für einen Nutzer in besonders einfacher Weise durchführbare Überführung des Zwischenbodenelements von seiner Verstauposition in seine Nutzposition und umgekehrt. Anderseits ist das zumindest eine Zwischenbodenelement in der Verstauposition aufgrund des an die entsprechende Seitenwand geschwenkten Zustands raumsparend an dieser lagerbar. Eine Breite des Laderaums unterhalb des Zwischenbodenelements wird dabei aufgrund des "Hochklappens" desselben nicht beeinträchtigt und steht in der gesamten Breite zur Verfügung. Auch oberhalb der Seitenwand-Schwenkachse ist eine Verringerung der Breite des Laderaums minimiert, so dass eine maximale Beladung des Fahrzeugaufbaus weiterhin zumindest nahezu uneingeschränkt möglich ist. Dabei ist das Zwischenbodenelement aufgrund seines schwenkbaren Aufbaus für einen Nutzer des Fahrzeugs in besonders einfacher, sicherer und zuverlässiger Weise zwischen der Verstauposition und der Nutzposition bewegbar.

In einer weiteren möglichen Ausgestaltung des Fahrzeugaufbaus ist das zumindest eine Zwischenbodenelement mehrteilig, mehrere Zwischenbodenelement-Teile aufweisend, ausgebildet. Eine solche Ausbildung kann auch zu einer vereinfachten Handhabung und zu einem vereinfachten Verstauen des Zwischenbodenelements führen, da mehrere Zwischenbodenelement-Teile sich gegenüber einem einteiligen Zwischenbodenelement durch ein geringeres Gewicht und jeweils geringer Abmessungen auszeichnen.

In einer weiteren möglichen Ausgestaltung des Fahrzeugaufbaus
- weist ein erstes Zwischenbodenelement-Teil an einem Ende zumindest eine Schwenk-Befestigungsvorrichtung auf, mittels welcher dieses um eine parallel zum Ladeboden verlaufende Seitenwand-Schwenkachse schwenkbar an der ersten Seitenwand und/oder zwei nebeneinander angeordneten Befestigungsschienen befestigt oder befestigbar ist,
- weist ein zweites Zwischenbodenelement-Teil an einem Ende zumindest eine Schwenk-Befestigungsvorrichtung auf, mittels welcher dieses um eine parallel zum Ladeboden verlaufende Seitenwand-Schwenkachse schwenkbar an der zweiten Seitenwand und/oder zwei nebeneinander angeordneten Befestigungsschienen befestigt oder befestigbar ist, und
- sind beide Zwischenbodenelement-Teile jeweils ausgehend von einer Verstauposition, in welcher diese mit ihrer Oberseite zur jeweils zugehörigen Seitenwand gerichtet und zumindest im Wesentlichen parallel angeordnet sind, in eine Nutzposition, in welcher diese mit ihrer Unterseite zumindest abschnittsweise auf den Querträgern aufliegen, um die Seitenwand-Schwenkachse nach unten schwenkbar.

Eine solche Ausgestaltung des Zwischenbodenelements ermöglicht eine Ausbildung desselben aus zwei Zwischenbodenelement-Teilen, welche sich durch eine gegenüber einem einteiligen Zwischenbodenelement verringerte Länge auszeichnen. Somit sind die Zwischenbodenelement-Teile mit geringerem Raumbedarf, insbesondere auch an Seitenwänden mit geringer Höhe und/oder mit größerem Abstand der Seitenwand-Schwenkachse vom Ladeboden, an den Seitenwänden lagerbar.

In einer weiteren möglichen Ausgestaltung des Fahrzeugaufbaus
- weist ein erstes Zwischenbodenelement-Teil an einem ersten Ende zumindest eine Schwenk-Befestigungsvorrichtung auf, mittels welcher dieses um eine parallel zum Ladeboden verlaufende Seitenwand-Schwenkachse schwenkbar an der ersten Seitenwand oder der zweiten Seitenwand und/oder zwei nebeneinander angeordneten Befestigungsschienen befestigt oder befestigbar ist,
- ist ein zweites Zwischenbodenelement-Teil an einem Ende mittels einer Schwenk-Befestigungsvorrichtung um eine parallel zum Ladeboden verlaufende Schwenkachse schwenkbar an einem dem ersten Ende gegenüberliegenden zweiten Ende des ersten Zwischenbodenelement-Teils befestigt,
- ist das erste Zwischenbodenelement-Teil in einer Verstauposition mit seiner Oberseite zur ersten Seitenwand bzw. zweiten Seitenwand gerichtet und zumindest im Wesentlichen parallel verlaufend angeordnet,
- ist das zweite Zwischenbodenelement-Teil in der Verstauposition mit seiner Unterseite zur Unterseite des ersten Zwischenbodenelement-Teils gerichtet und zumindest im Wesentlichen parallel verlaufend angeordnet,
- ist bei einer Überführung der Zwischenbodenelement-Teile von der Verstauposition in eine Nutzposition das erste Zwischenbodenelement-Teil um die Seitenwand-Schwenkachse derart nach unten schwenkbar und das zweite Zwischenbodenelement-Teil um die Schwenkachse von dem ersten Zwischenbodenelement-Teil derart nach oben schwenkbar, dass beide Zwischenbodenelement-Teile mit ihrer Unterseite zumindest abschnittsweise auf den Querträgern aufliegen.

Auch diese Ausgestaltung des Zwischenbodenelements ermöglicht eine Ausbildung desselben aus zwei Zwischenbodenelement-Teilen, welche sich durch eine gegenüber einem einteiligen Zwischenbodenelement verringerte Länge auszeichnen. Somit sind die Zwischenbodenelement-Teile mit geringerem Raumbedarf, insbesondere auch an einer Seitenwänden mit geringer Höhe und/oder mit größerem Abstand der Seitenwand-Schwenkachse vom Ladeboden an der Seitenwand lagerbar. Die Verbindung der beiden Zwischenbodenelement-Teile über die Schwenkachse ermöglicht eine besonders schnelle und einfach für einen Nutzer ausführbare Überführung des Zwischenbodenelements von der Verstauposition in die Nutzposition und umgekehrt.

In einer weiteren möglichen Ausgestaltung des Fahrzeugaufbaus weist dieser zumindest jeweils eine parallel und in Längsrichtung zu dem Ladeboden und im Bereich der jeweiligen Seitenwand verlaufende Längs-Befestigungsschiene, beispielsweise eine so genannte Ladungssicherungsschiene, auf, an welcher das zumindest eine Zwischenbodenelement zur Ausbildung der Seitenwand-Schwenkachse befestigbar ist.

In einer weiteren möglichen Ausgestaltung des Fahrzeugaufbaus weist dieser jeweils zwischen den Befestigungsschienen und insbesondere planparallel zur jeweiligen Seitenwand verlaufende Befestigungswände, beispielsweise so genannte Schlüssellochbleche, auf. Diese ermöglichen eine hinsichtlich der Position besonders flexible Befestigung des zumindest einen Zwischenbodenelements unter Ausbildung der Seitenwand-Schwenkachse.

In einer weiteren möglichen Ausgestaltung des Fahrzeugaufbaus ist eine sich in die gleiche Richtung wie die Längsrichtung des Ladebodens erstreckende Breite des zumindest einen Zwischenbodenelements geringer als ein Abstand zwischen zwei unmittelbar benachbart an einer Seitenwand angeordneten Befestigungsschienen, an welchen die beiden zur Befestigung des zumindest einen Zwischenbodenelements vorgesehenen Querträger befestigt sind. Dies ermöglicht einerseits eine Lagerung des Zwischenbodenelements in der Verstauposition zwischen den Befestigungsschienen und andererseits eine frei wählbare Anordnung der Querträger in verschiedenen Höhen an den Befestigungsschienen, während das zumindest eine Zwischenbodenelement sich in der Verstauposition befindet.

In einer weiteren möglichen Ausgestaltung des Fahrzeugaufbaus ist an den zur Befestigung des zumindest einen Zwischenbodenelements unmittelbar benachbart angeordneten oder anordbaren Querträgern jeweils eine dem jeweils anderen Querträger zugewandte und zur zumindest abschnittsweisen Auflage einer Unterseite des zumindest einen Zwischenbodenelements ausgebildete Befestigungsstruktur angeordnet. Dies ermöglicht, dass ein Zwischenbodenelement an den Querträgern befestigt werden kann, dessen Breite geringer als der Abstand zwischen den benachbarten Befestigungsschienen ist.

In einer weiteren möglichen Ausgestaltung des Fahrzeugaufbaus entspricht ein Abstand einer zur Auflage des zumindest einen Zwischenbodenelements ausgebildeten Oberseite der jeweiligen Befestigungsstruktur zu einer Oberseite des zugehörigen Querträgers einer Dicke des zumindest einen Zwischenbodenelements oder ist größer als diese. Dies ermöglicht eine mit den Oberseiten der Querträger bündige oder gegenüber diesen herabgesetzte Anordnung des zumindest einen Zwischenbodenelements, was eine besonders stabile und gegen Verrutschen gesicherte Anordnung des zumindest einen Zwischenbodenelements zwischen den Querträgern ermöglicht. Bei der bündigen Anordnung kann zusätzlich eine ebene Ladefläche erzeugt werden, wodurch eine Beladung signifikant vereinfacht ist.

In einer weiteren möglichen Ausgestaltung des Fahrzeugaufbaus weist das zumindest eine Zwischenbodenelement eine flächige Struktur auf, welche insbesondere zumindest ein Gitter, zumindest ein Lochblech, zumindest eine Platte und/oder mehrere Quer- und/oder Längsstreben aufweist. Insbesondere ist die Ausführung der Struktur in Abhängigkeit einer Nutzung des zumindest einen Zwischenbodenelements gewählt.

In einer weiteren möglichen Ausgestaltung des Fahrzeugaufbaus weisen die Befestigungsschienen jeweils mehrere in Längsrichtung der jeweiligen Befestigungsschiene übereinander angeordnete Befestigungsstrukturen auf, wobei jede Befestigungsstruktur zur Befestigung eines Endes eines Querträgers ausgebildet ist. Dies ermöglicht eine Anordnung der Querträger in unterschiedlichen Abständen zum Ladeboden und somit eine besonders flexible Erzeugung der zumindest einen weiteren Ladeebene in unterschiedlichen Höhen im Laderaum des Fahrzeugaufbaus.

In einer weiteren möglichen Ausgestaltung des Fahrzeugaufbaus weisen die Seitenwände jeweils eine mechanisch flexible und biegeelastische Plane und mehrere ausgehend vom Ladeboden zumindest im Wesentlichen senkrecht nach oben geführte Rungen auf, wobei die Befestigungsschienen jeweils an einer Runge angeordnet sind. Dies ermöglicht die Erzeugung der zumindest einen weiteren Ladeebene auch bei Fahrzeugaufbauten mit Planen, beispielsweise so genannten Curtain Siders.

In einer weiteren möglichen Ausgestaltung des Fahrzeugaufbaus weisen die Seitenwände jeweils zumindest ein flächiges und mechanisch starr ausgebildetes Wandelement auf und die Befestigungsschienen sind jeweils unmittelbar an dem zumindest einen Wandelement und/oder an einem mit dem zumindest einen Wandelement mechanisch gekoppelten Rahmen angeordnet. Dies ermöglicht die Erzeugung der zumindest einen weiteren Ladeebene bei Fahrzeugaufbauten mit festen Seitenwänden, beispielsweise so genannten Kofferaufbauten.

In einer weiteren möglichen Ausgestaltung des Fahrzeugaufbaus
- weist das zumindest eine Zwischenbodenelement zumindest eine sich von einer Oberseite zu einer Unterseite des Zwischenbodenelements erstreckende Materialaussparung auf und
- ist die Materialaussparung in einer Verstauposition des zumindest einen Zwischenbodenelements, in welcher dieses mit seiner Oberseite oder Unterseite zur ersten Seitenwand bzw. zweiten Seitenwand gerichtet und zumindest im Wesentlichen parallel verlaufend angeordnet ist, derart vor einer zwischen dem zumindest einen Zwischenbodenelement und der entsprechenden Seitenwand, zu welchem die Oberseite oder Unterseite gerichtet ist, angeordneten Befestigungsstruktur angeordnet, dass die Befestigungsstruktur durch die Materialaussparung zugänglich ist.

Diese Zugänglichkeit der Befestigungsstruktur auch in der Verstauposition des Zwischenbodenelements, beispielsweise in einem beschriebenen, an die jeweilige Seitenwand angeklappten Zustand, ermöglicht auch dieser Verstauposition die Nutzung der Befestigungsstruktur, beispielsweise zur Ladungssicherung. Somit ist auch bei einer flachen Lagerung des zumindest einen Zwischenbodenelements an zumindest einer der Seitenwände ein Nutzwert des Fahrzeugaufbaus nicht oder nur in sehr geringem Maße eingeschränkt.

Das erfindungsgemäße Fahrzeug, insbesondere Nutzfahrzeug, weist zumindest einen vorgenannten Fahrzeugaufbau auf und zeichnet sich deshalb durch die Vorteile des Fahrzeugaufbaus aus.

Ausführungsbeispiele der Erfindung werden im Folgenden anhand von Zeichnungen näher erläutert.

Darin zeigen:
- Figur 1: schematisch eine perspektivische Ansicht eines Teil eines Fahrzeugaufbaus,
- Figur 2: schematisch eine perspektivische Ansicht eines Ausschnitts eines Fahrzeugaufbaus mit in einer oberen Position angeordneten Querträgern,
- Figur 3: schematisch eine perspektivische Ansicht des Ausschnitt gemäß Figur 2 mit in einer mittleren Position angeordneten Querträgern,
- Figur 4: schematisch eine Draufsicht eines Ausschnitts eines Fahrzeugaufbaus mit in einer unteren Position angeordneten Querträgern,
- Figuren 5 bis 9: schematisch perspektivische Ansichten des Ausschnitts gemäß Figur 2 mit in einer unteren Position angeordneten Querträgern und verschiedenen Schwenkpositionen eines Zwischenbodenelements,
- Figur 10: schematisch eine Draufsicht eines Ausschnitts eines Fahrzeugaufbaus,
- Figur 11: schematisch eine Schnittdarstellung des Ausschnitts gemäß Figur 10,
- Figur 12: schematisch eine Draufsicht eines Ausschnitts eines Fahrzeugaufbaus,
- Figur 13: schematisch eine Schnittdarstellung des Ausschnitts gemäß Figur 12,
- Figur 14: schematisch eine perspektivische Ansicht eines Ausschnitts eines Fahrzeugaufbaus mit in einer unteren Position angeordneten Querträgern und
- Figur 15: schematisch eine Draufsicht eines Ausschnitts eines Fahrzeugaufbaus.

Einander entsprechende Teile sind in allen Figuren mit den gleichen Bezugszeichen versehen.

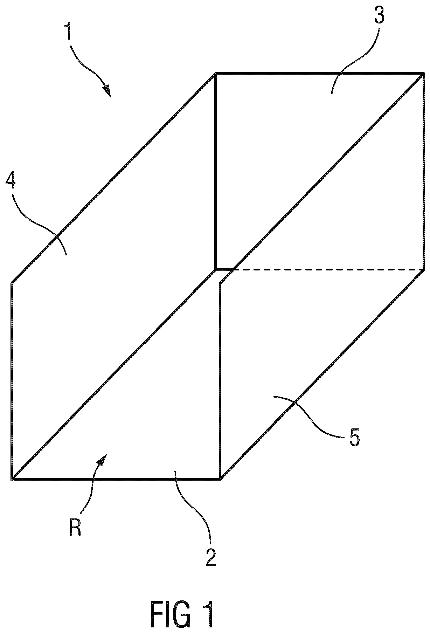

In **Figur 1** ist eine perspektivische Ansicht eines Teils eines Fahrzeugaufbaus 1 für ein Nutzfahrzeug oder einen Anhänger oder einen Auflieger für ein Nutzfahrzeug in stark vereinfachter Weise dargestellt.

Der Fahrzeugaufbau 1 umfasst einen Ladeboden 2, eine senkrecht zu diesem verlaufende und an einer vorderen Stirnseite angeordnete Stirnwand 3, zwei sich gegenüberliegende Seitenwände 4, 5 und in nicht näher dargestellter Weise ein Dach und eine der Stirnwand 3 gegenüberliegende und an einer hinteren Stirnseite angeordnete Tür. Der Ladeboden 2, die Stirnwand 3, die Seitenwände 4, 5, das Dach und die Tür schließen einen Laderaum Rein.

Die Seitenwände 4, 5 weisen dabei in nicht näher dargestellter Weise beispielsweise jeweils eine mechanisch flexible und biegeelastische Plane und mehrere ausgehend vom Ladeboden 2 zumindest im Wesentlichen senkrecht nach oben geführte Rungen auf. Der Fahrzeugaufbau 1 ist bei dieser Ausführung beispielsweise bei so genannten Curtain Siders verwendbar. Alternativ weisen die Seitenwände 4, 5 jeweils zumindest ein flächiges und mechanisch starr ausgebildetes Wandelement auf. Der Fahrzeugaufbau 1 ist bei dieser Ausführung beispielsweise bei so genannten Kofferaufbauten verwendbar.

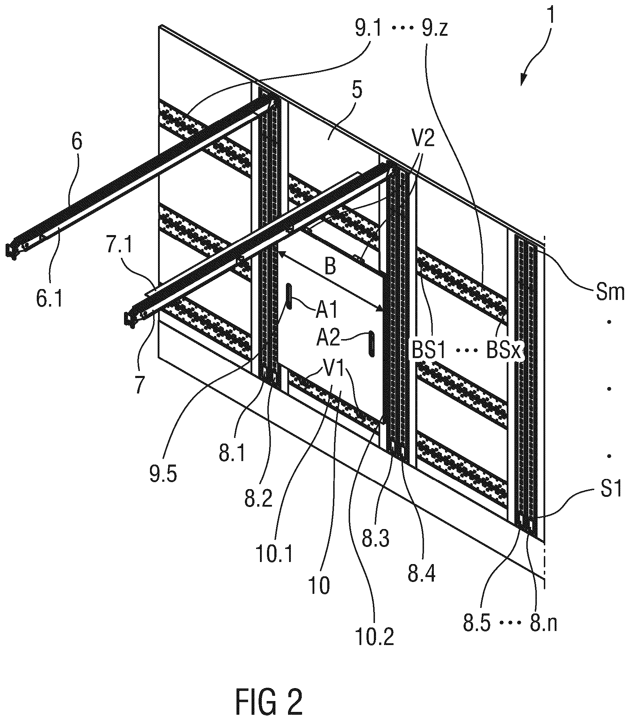

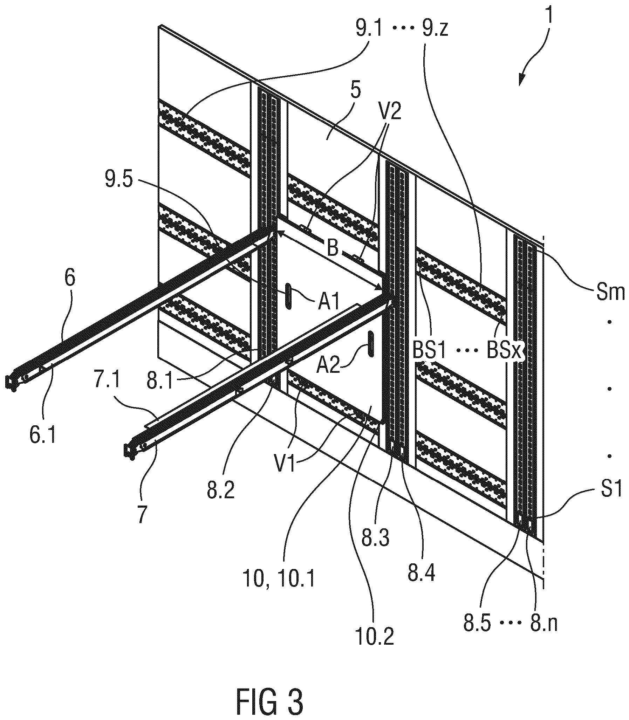

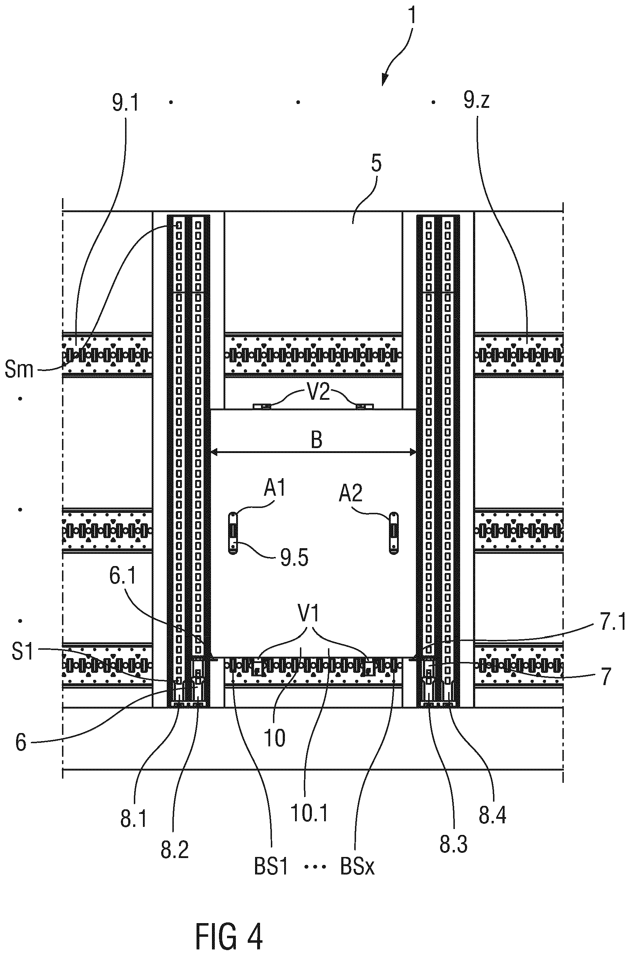

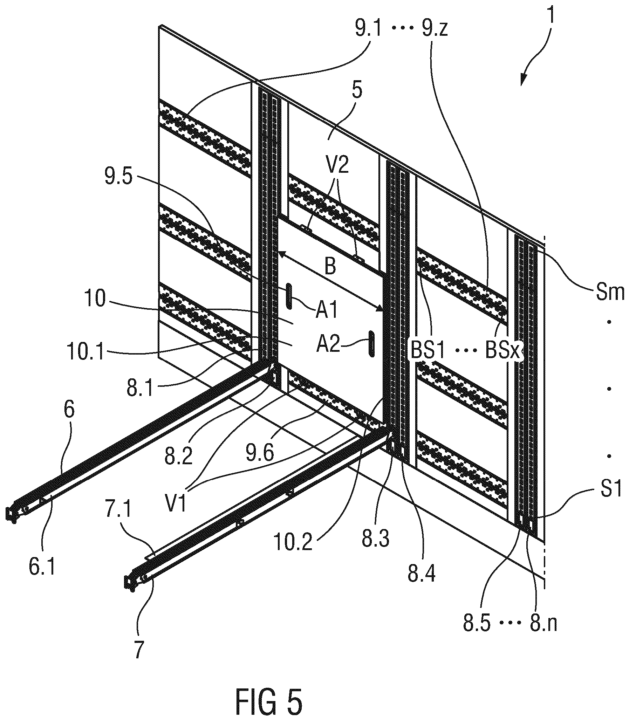

**Figur 2** zeigt eine perspektivische Ansicht eines Ausschnitts des Fahrzeugaufbaus 1 gemäß Figur 1 im Bereich der Seitenwand 5 mit in einer oberen Position angeordneten Querträgern 6, 7, auch als Doppelstockbalken bezeichnet. In **Figur 3** ist eine perspektivische Ansicht des Ausschnitts des Fahrzeugaufbaus 1 gemäß Figur 1 im Bereich der Seitenwand 5 mit in einer mittleren Position angeordneten Querträgern 6, 7 dargestellt. Die **Figuren 4** **und** **5** zeigen in einer Draufsicht und einer perspektivischen Ansicht den Ausschnitt des Fahrzeugaufbau 1 gemäß Figur 1 im Bereich der Seitenwand 5 mit in einer unteren Position angeordneten Querträgern 6, 7.

An der Seitenwand 5 sind weiterhin mehrere Befestigungsschienen 8.1 bis 8.n angeordnet, welche zumindest im Wesentlichen parallel zueinander verlaufen und von einer Ladefläche des Ladebodens 2 zumindest im Wesentlichen senkrecht nach oben gerichtet sind. In einer möglichen Ausgestaltung des Fahrzeugaufbaus 1 sind die Befestigungsschienen 8.1 bis 8.n beabstandet zueinander über eine gesamte Länge der Seitenwand 5 angeordnet. Die Befestigungsschienen 8.1 bis 8.n, auch als Doppelstockschienen bezeichnet, sind zu einer Befestigung der Querträger 6, 7 ausgebildet und weisen hierzu jeweils mehrere in Längsrichtung der jeweiligen Befestigungsschiene 8.1 bis 8.n übereinander angeordnete Befestigungsstrukturen S1 bis Sm auf. Dabei ist jede Befestigungsstruktur S1 bis Sm zur Befestigung eines Endes eines Querträgers 6, 7 ausgebildet. Die Ansichten in den Figuren 2 bis 5 zeigen lediglich Ausschnitte der Seitenwand 5. Insbesondere schließt sich unterhalb des im gezeigten Ausschnitt ausgebildeten Abschnitts der Seitenwand 5 ein weiterer Abschnitt an, welcher weitere Befestigungsschienen 8.1 bis 8.n aufweist.

Weist die Seitenwand 5 jeweils eine mechanisch flexible und biegeelastische Plane und mehrere Rungen auf, sind die Befestigungsschienen 8.1 bis 8.n insbesondere jeweils an einer Runge angeordnet oder integraler Bestandteil dieser. Weist die Seitenwand 5 jeweils zumindest ein flächiges und mechanisch starr ausgebildetes Wandelement auf, sind die Befestigungsschienen 8.1 bis 8.n jeweils unmittelbar an dem zumindest einen Wandelement und/oder an einem mit dem zumindest einen Wandelement mechanisch gekoppelten Rahmen angeordnet. Dabei können die Befestigungsschienen 8.1 bis 8.n bündig mit einer inneren Oberfläche der Seitenwand 5 abschließen.

Weiterhin sind, insbesondere parallel und in Längsrichtung zu dem Ladeboden 2 verlaufend, zwischen den Befestigungsschienen 8.1 bis 8.n an der Seitenwand 5 Längs-Befestigungsschienen 9.1 bis 9.z angeordnet. Diese Längs-Befestigungsschienen 9.1 bis 9.z werden beispielsweise auch als Ladungssicherungsschiene bezeichnet.

Die der Seitenwand 5 gegenüberliegende Seitenwand 4 ist zumindest bezüglich der Befestigungsschienen 8.1 bis 8.n und der Längs-Befestigungsschienen 9.1 bis 9.z analog zur Seitenwand 5 ausgebildet. Insbesondere sind die Befestigungsschienen 8.1 bis 8.n der Seitenwände 4, 5 sich gegenüberliegend angeordnet. Sich jeweils gegenüberliegende Befestigungsschienen 8.1 bis 8.n sind an einer gleichen Längsposition, bezogen auf die Längsrichtung des Ladebodens 2, angeordnet. Insbesondere sind auch die Längs-Befestigungsschienen 9.1 bis 9.z der Seitenwände 4, 5 sich gegenüberliegend angeordnet. Sich jeweils gegenüberliegende Längs-Befestigungsschienen 9.1 bis 9.z sind in der gleichen Höhe an den Seitenwänden 4, 5 angeordnet.

Durch eine Befestigung der Querträger 6, 7 an sich gegenüberliegenden Befestigungsschienen 8.1 bis 8.n ist es möglich, eine weitere, planparallel zu dem Ladenboden 2 verlaufende Ladeebene zu erzeugen. Auf zwei jeweils in den Befestigungsschienen 8.2, 8.3 benachbart und parallel angeordneten Querträgern 6, 7 sind Ladegutbehälter und/oder Transportpaletten mit normierter Größe, beispielsweise so genannte Euro-Paletten, anordbar. Das heißt, ein Abstand zwischen den Befestigungsschienen 8.1 bis 8.n und somit zwischen den Querträgern 6, 7 ist derart ausgebildet, dass derart normierte Ladegutbehälter und/oder Transportpaletten auf den Querträgern 6, 7 positionierbar sind.

Dabei kann mindestens ein Paar von Querträgern 6, 7 innerhalb des Laderaums R zur Erzeugung der weiteren Ladeebene vorgesehen sein. Der Laderaum R kann jedoch auch mit mehreren Paaren von Querträgern 6, 7 über einen Teil seiner Länge oder seine gesamte Länge in mehrere Ladeebenen unterteilt sein. Dabei können je nach Ladegut unterschiedliche Paare von Querträger 6, 7 in unterschiedlichen Höhen an den Befestigungsschienen 8.1 bis 8.n befestigt sein. Somit ist der Laderaum R sehr flexibel mit Ladung mit unterschiedlichen Abmessungen beladbar.

In der in Figur 2 gezeigten Ansicht sind die Querträger 6, 7 in der oberen Position an den Befestigungsschienen 8.2, 8.3 angeordnet. In dieser Position werden die Querträger 6, 7 beispielsweise dann angeordnet, wenn die Erzeugung einer weiteren Ladeebene nicht erforderlich ist. In der in Figur 3 gezeigten Ansicht sind die Querträger 6, 7 in der mittleren Position an den Befestigungsschienen 8.2, 8.3 angeordnet. In dieser Position werden die Querträger 6, 7 beispielsweise dann angeordnet, wenn die Erzeugung einer weiteren Ladeebene mit geringer Höhe erforderlich ist. In den in Figur 3 gezeigten Ansichten sind die Querträger 6, 7 in der unteren Position an den Befestigungsschienen 8.2, 8.3 angeordnet. In dieser Position werden die Querträger 6, 7 beispielsweise dann angeordnet, wenn die Erzeugung einer weiteren Ladeebene mit größerer Höhe erforderlich ist.

An der Seitenwand 5 ist weiterhin ein Zwischenbodenelement 10 befestigt, welches derart auf die Querträger 6, 7 auflegbar und an diesen befestigbar ist, dass dieses beabstandet zu dem Ladeboden 2 und zumindest im Wesentlichen parallel zu diesem zwischen den beiden Seitenwänden 4, 5 verläuft. Diese Anordnung ist dann möglich, wenn die Querträger 6, 7 sich in einer unteren Position gemäß den Figuren 4 und 5 befinden. In den dargestellten Ausführungsbeispielen gemäß den Figuren 2 bis 5 ist das Zwischenbodenelement 10 in einer Verstauposition dargestellt, in welcher dieses raumsparend an die Seitenwand 5 geschwenkt ist.

Diese zusätzliche Möglichkeit, zumindest ein Zwischenbodenelement 10 auf den zwei an den Befestigungsschienen 8.2, 8.3 benachbart und parallel angeordneten Querträgern 6, 7 sicher zu befestigen, führt dazu, dass auch Güter, welche nicht in auf den Querträgern 6, 7 positionierbaren Ladegutbehältern oder auf Transportpaletten gelagert sind, in der zumindest einen weiteren Ladeebene transportiert werden können. Das heißt, es kann mittels der zumindest einen weiteren Ladeebene in besonders vorteilhafter Weise oberhalb und beabstandet zu dem Ladeboden 2 des Fahrzeugaufbaus 1 ein zweiter, insbesondere planparallel zu dem Ladeboden 2 verlaufender zweiter Ladeboden geschaffen werden. Dies ermöglicht, dass unterhalb des zweiten Ladebodens beispielsweise Transportgüter gelagert werden können, auf welche keine weiteren Transportgüter gestapelt werden können.

Auf dem zweiten Ladeboden können dann weitere Transportgüter gelagert werden, so dass eine Höhenausnutzung des Laderaums R maximiert werden kann. Dabei ist die zweite Ladeebene aufgrund der Verwendung der Befestigungsschienen 8.1 bis8.n, Querträger 6, 7 und des zumindest einen Zwischenbodenelements 10 mit besonders geringem Aufwand sowohl für Ladegutbehälter und/oder Transportpaletten mit normierter Größe als auch für anders gelagerte Güter realisierbar. Die Nutzung der Querträger 6, 7 als "Unterlage" für das zumindest eine Zwischenbodenelement 10 ermöglicht dabei in besonders vorteilhafter Weise, dass keine auf den unteren Ladeboden 2 führende Mittelabstützung unterhalb der erzeugten weiteren Ladeebene erforderlich ist, so dass der Laderaum R unterhalb der weiteren Ladeebene nicht eingeschränkt ist.

Analog zu den Querträgern 6, 7 können auch mehrere Zwischenbodenelemente 10 nebeneinander an der Seitenwand 4 und/oder der Seitenwand 5 befestigt sein, so dass der Laderaum R über einen Teil seiner Länge oder seine gesamte Länge in mehrere Ladeebenen unterteilt sein kann. Dabei können je nach Ladegut unterschiedliche Paare von Querträger 6, 7 in unterschiedlichen Höhen an den Befestigungsschienen 8.1 bis 8.n befestigt sein. Somit ist der Laderaum R sehr flexibel mit Ladung mit unterschiedlichen Abmessungen beladbar.

Insbesondere weist das Zwischenbodenelement 10 eine flächige Struktur auf, welche insbesondere zumindest ein Gitter, zumindest ein Lochblech, zumindest eine Platte und/oder mehrere Quer- und/oder Längsstreben aufweist.

Das Zwischenbodenelement 10 weist im dargestellten Ausführungsbeispiel zwei Zwischenbodenelement-Teile 10.1, 10.2, welche zueinander schwenkbar sind, auf. Die Zwischenbodenelement-Teile 10.1, 10.2 weisen jeweils zwei Materialaussparungen A1 bis A4 auf, welche derart angeordnet und ausgebildet sind, dass in der dargestellten Verstauposition des Zwischenbodenelements 10 hinter diesem angeordnete Befestigungsstrukturen BS1 bis BSx einer Längs-Befestigungsschiene 9.5 durch die Materialaussparungen A1 bis A4 zugänglich sind.

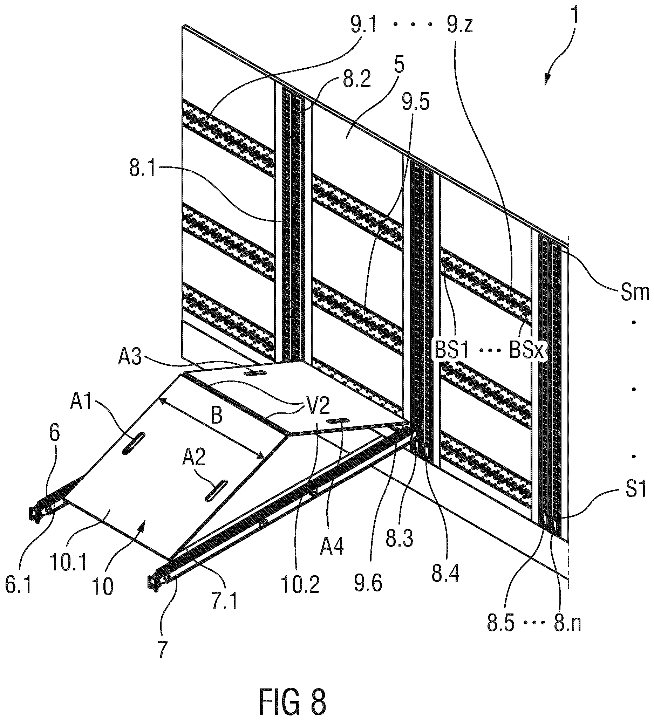

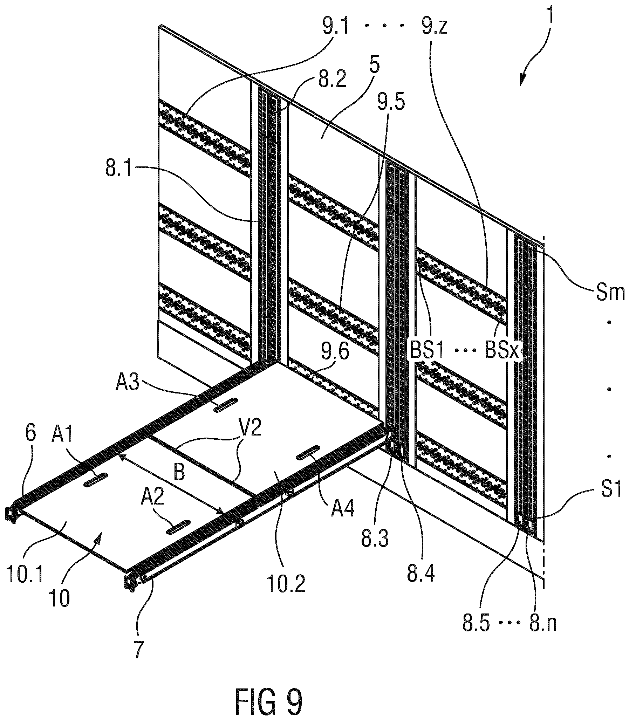

Die Materialaussparungen A3 und A4 sind beispielsweise in den Figuren 8 und 9 näher dargestellt.

Dabei ist eine sich in die gleiche Richtung wie die Längsrichtung des Ladebodens 2 erstreckende Breite B des zumindest einen Zwischenbodenelements 10 geringer als ein Abstand zwischen den zwei unmittelbar benachbart an der Seitenwand 5 angeordneten Befestigungsschienen 8.2, 8.3, an welchen die beiden zur Befestigung des zumindest einen Zwischenbodenelements 10 vorgesehenen Querträger 6, 7 befestigt sind. Somit kann das Zwischenbodenelement 10 in der Verstauposition zwischen den beiden Befestigungsschienen 8.2, 8.3 gelagert werden und die Querträger 6, 7 sind in frei wählbaren Höhen an den Befestigungsschienen 8.2, 8.3 anordbar.

Zur Auflage und Befestigung des Zwischenbodenelements 10 auf den Querträgern 6, 7 ist an jedem Querträger 6, 7 jeweils eine dem jeweils anderen Querträger 6, 7 zugewandte und zur zumindest abschnittsweisen Auflage einer Unterseite des Zwischenbodenelements 10 ausgebildete Befestigungsstruktur 6.1, 7.1 angeordnet. Die Befestigungsstrukturen 6.1, 7.1 sind dabei vorliegend mittels eines an den Querträgern 6, 7 befestigten L-Profils gebildet, können jedoch auch jede andere mögliche Form aufweisen, um eine Auflage für das Zwischenbodenelement 10 zu generieren. Dabei entspricht ein Abstand einer zur Auflage des Zwischenbodenelements 10 ausgebildeten Oberseite der jeweiligen Befestigungsstruktur 6.1, 7.1, beispielsweise eines Schenkels des jeweiligen L-Profils, zu einer Oberseite des zugehörigen Querträgers 6, 7 einer Dicke des Zwischenbodenelements 10, so dass dessen Oberseite im ausgeklappten und aufgelegten Zustand bündig mit den Oberseiten der Querträger 6, 7 verläuft.

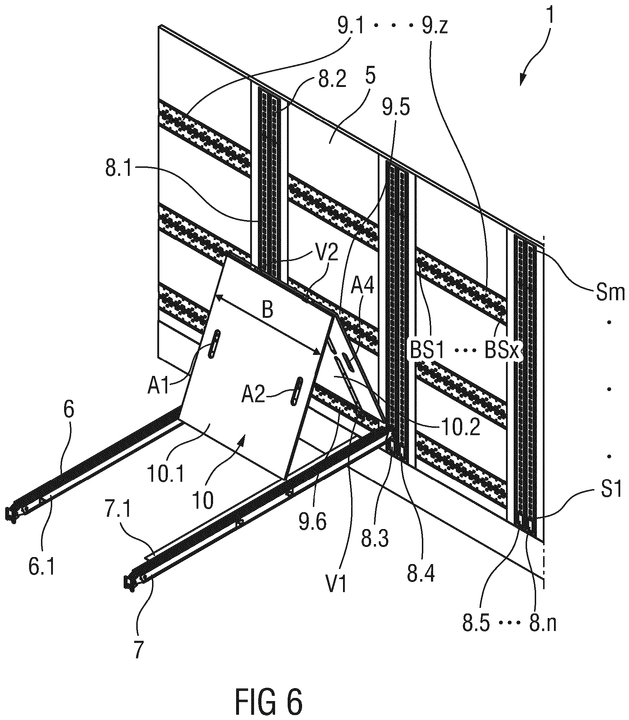

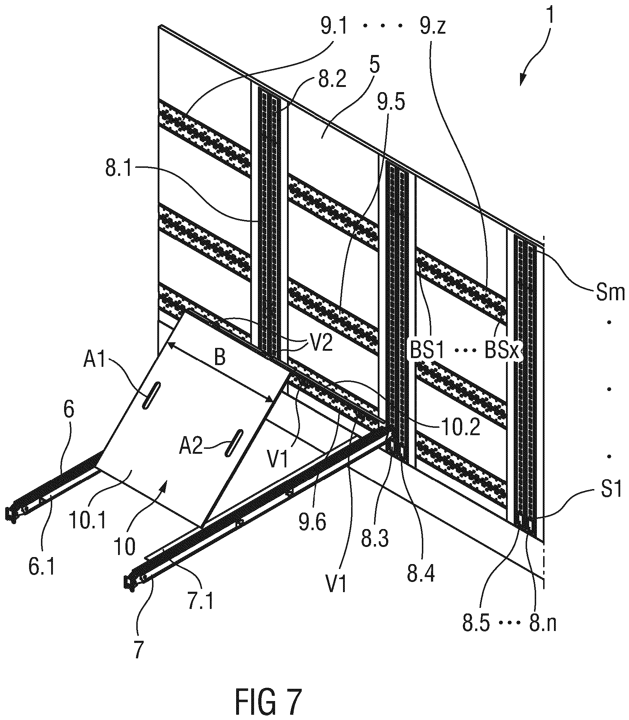

In den **Figuren 5 bis 9** sind perspektivische Ansichten des Ausschnitts gemäß Figur 2 mit in einer unteren Position angeordneten Querträgern 6, 7 und verschiedenen Schwenkpositionen des Zwischenbodenelements 10 dargestellt.

Das Zwischenbodenelement 10 weist - wie bereits ausgeführt - zwei Zwischenbodenelement-Teile 10.1, 10.2 auf.

Dabei weist ein erstes Zwischenbodenelement-Teil 10.2 an einem ersten Ende zumindest eine Schwenk-Befestigungsvorrichtung V1 auf, mittels welcher dieses um eine parallel zum Ladeboden 2 verlaufende Seitenwand-Schwenkachse schwenkbar an der Längs-Befestigungsschiene 9.6 befestigt ist. Insbesondere ist die Schwenk-Befestigungsvorrichtung V1 derart ausgebildet, dass diese in einfacher Weise und beispielsweise werkzeuglos von den Längs-Befestigungsschienen 9.1 bis 9.z demontierbar und an diesen montierbar ist. Beispielsweise umfasst die Schwenk-Befestigungsvorrichtung V1 zapfenförmige Befestigungselemente, welche in dazu korrespondierenden Öffnungen der Längs-Befestigungsschienen 9.1 bis 9.z einhakbar sind.

Ein zweites Zwischenbodenelement-Teil 10.1 ist an einem Ende mittels einer Schwenk-Befestigungsvorrichtung V2, welche beispielsweise Scharniere umfasst, um eine parallel zum Ladeboden 2 verlaufende Schwenkachse schwenkbar an einem dem ersten Ende gegenüberliegenden zweiten Ende des ersten Zwischenbodenelement-Teils 10.2 befestigt.

Dabei ist das erste Zwischenbodenelement-Teil 10.2 in der einen Verstauposition mit seiner Oberseite zur Seitenwand 4 gerichtet und zumindest im Wesentlichen parallel zu dieser und zur Seitenwand 5 verlaufend angeordnet.

Das zweite Zwischenbodenelement-Teil 10.1 ist in der Verstauposition mit seiner Unterseite zur Unterseite des ersten Zwischenbodenelement-Teils 10.2 gerichtet und zumindest im Wesentlichen parallel verlaufend zu diesem angeordnet.

Bei einer in den Figuren 5 bis 9 dargestellten Überführung der Zwischenbodenelement-Teile 10.1, 10.2 von der Verstauposition (Figur 5) in eine Nutzposition (Figur 9) wird das erste Zwischenbodenelement-Teil 10.2 um die Seitenwand-Schwenkachse derart nach unten geschwenkt und das zweite Zwischenbodenelement-Teil 10.1 um die Schwenkachse von dem ersten Zwischenbodenelement-Teil 10.2 derart nach oben geschwenkt, dass beide Zwischenbodenelement-Teile 10.1, 10.2 mit ihrer Unterseite abschnittsweise auf den Befestigungsstrukturen 6.1, 7.1 der Querträger 6, 7 aufliegen und sich über eine gesamte Breite des Laderaums R erstrecken.

In nicht näher dargestellten Ausführungen können auch an jeder Seitenwand 4, 5 derart mehrteilig ausgebildete Zwischenbodenelemente 10 sich gegenüberliegend angeordnet sein, welche von beiden Seitenwänden 4, 5 aus in Richtung einer Mitte des Laderaums R aufeinander zu geschwenkt werden.

Auch ist es möglich, dass das zumindest eine Zwischenbodenelement 10 einteilig ausgebildet ist. In einer möglichen Ausgestaltung weist das Zwischenbodenelement 10 in dieser einteiligen Ausgestaltung an einem Ende zumindest eine Schwenk-Befestigungsvorrichtung V1 auf, mittels welcher dieses um die parallel zum Ladeboden 2 verlaufende Seitenwand-Schwenkachse schwenkbar an einer der Seitenwände 4, 5, insbesondere einer Längs-Befestigungsschiene 9.1 bis 9.z, befestigt oder befestigbar ist. Das Zwischenbodenelement 10 wird ausgehend von einer Verstauposition, in welcher dieses mit seiner Oberseite zur jeweiligen Seitenwand 4, 5, an welcher dieses befestigt ist, gerichtet und zumindest im Wesentlichen parallel angeordnet ist, in eine Nutzposition, in welcher dieses mit seiner Unterseite abschnittsweise auf den Befestigungsstrukturen 6.1, 7.1 der Querträger 6, 7 aufliegt, um die Seitenwand-Schwenkachse nach unten geschwenkt und erstreckt sich dabei über eine gesamte Breite des Laderaums R.

Es ist auch möglich, dass das Zwischenbodenelement 10 zwei einteilig ausgebildete und an gegenüberliegenden Seitenwänden 4, 5 angeordnete Zwischenbodenelement-Teile 10.1, 10.2 aufweist, welche analog zu dem einteiligen Zwischenbodenelement 10 von beiden Seitenwänden 4, 5 aus in Richtung einer Mitte des Laderaums R aufeinander zu geschwenkt werden.

Auch ist es möglich, dass ein einteilig oder mehrteilig ausgebildetes Zwischenbodenelement 10 ohne Schwenkvorrichtung auf die Befestigungsstrukturen 6.1, 7.1 der Querträger 6, 7 aufgelegt wird und an anderen Positionen und/oder in anderer Weise in einer Verstauposition innerhalb des Fahrzeugaufbaus 1, aber auch außerhalb des Fahrzeugaufbaus 1, gelagert werden.

In nicht näher dargestellter Weise kann die Befestigung des Zwischenbodenelements 10 bzw. der Zwischenbodenelement-Teile 10.1, 10.2 auch in anderer Weise als mittels der dargestellten Befestigungsvorrichtung V1 erfolgen, beispielsweise mittels eines Gurtes und/oder anderen Zurrmitteln.

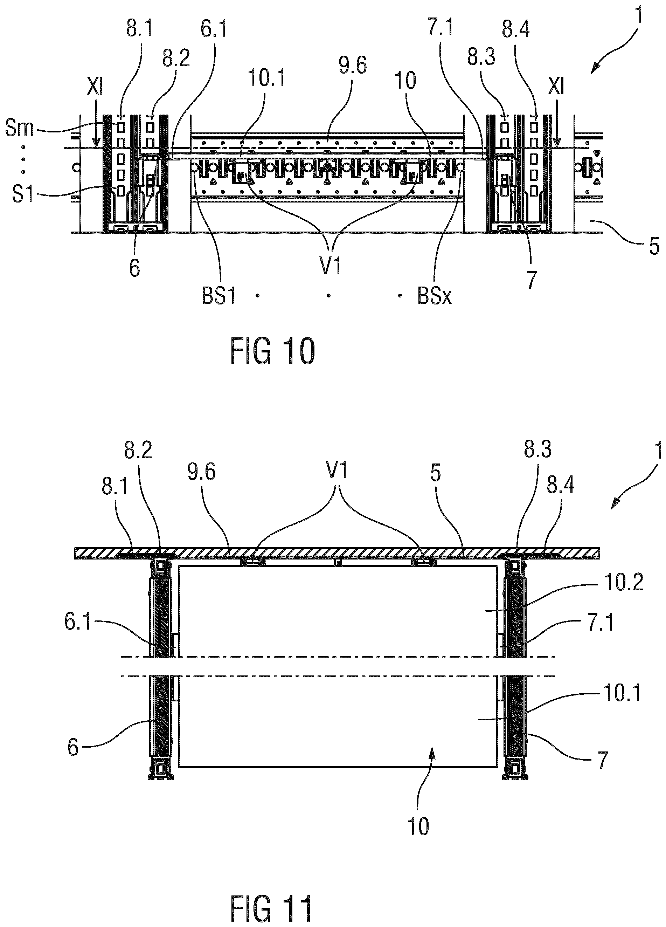

**Figur 10** zeigt eine Draufsicht eines vergrößerten Ausschnitts des Fahrzeugaufbaus 1 gemäß Figur 9, in welchem sich das Zwischenbodenelement 10 in seiner Nutzposition befindet. In **Figur 11** ist eine Schnittdarstellung des Ausschnitts gemäß Figur 10 dargestellt.

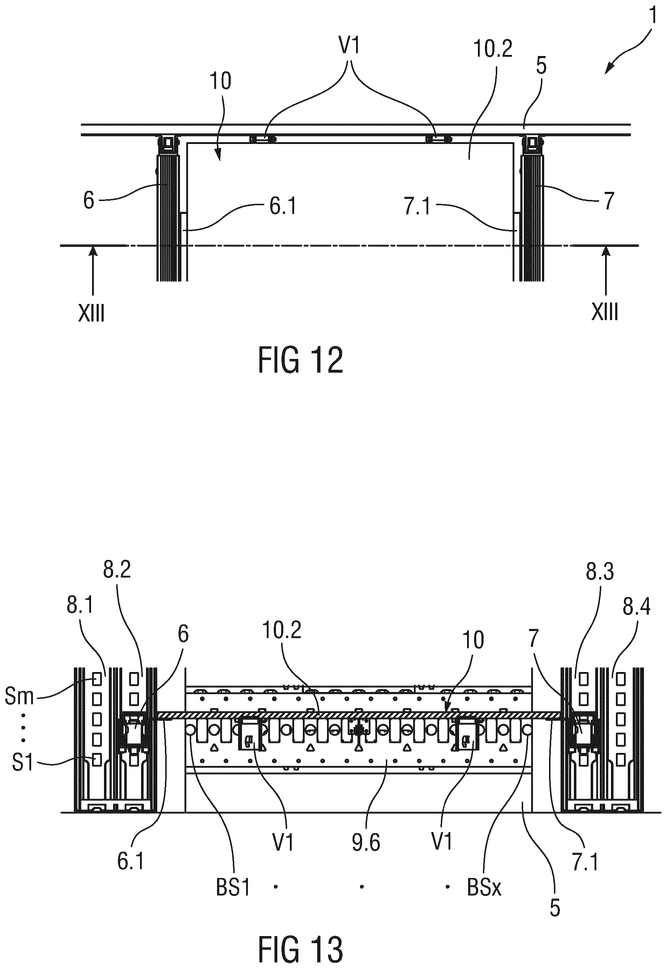

**Figur 12** zeigt eine Draufsicht eines vergrößerten Ausschnitts des Fahrzeugaufbaus 1 gemäß Figur 9 von oben, in welchem sich das Zwischenbodenelement 10 in seiner Nutzposition befindet. In **Figur 13** ist eine Schnittdarstellung des Ausschnitts gemäß Figur 12 dargestellt.

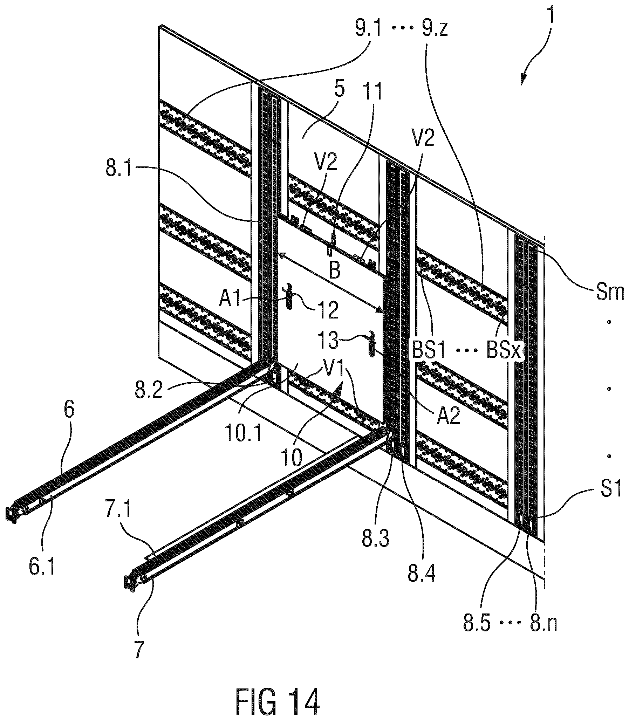

In **Figur 14** ist eine perspektivische Ansicht eines Ausschnitts eines Fahrzeugaufbaus 1 mit in einer unteren Position angeordneten Querträgern 6, 7 und in der Verstauposition befindlichem Zwischenbodenelement 10 dargestellt. Im Unterschied zu dem in Figur 5 dargestellten Ausführungsbeispiel ist das Zwischenbodenelement 10 mittels eines Befestigungselements 11 an der Seitenwand 5 in der Verstauposition gesichert und durch die Materialaussparungen A1 bis A4 sind Befestigungselemente 12, 13 geführt, welche beispielsweise zu einer Ladungssicherung, beispielsweise als Zurrpunkte, dienen und mit den Befestigungsstrukturen BS1 bis BSx der Längs-Befestigungsschiene 9.5 gekoppelt sind. Auch können diese Befestigungselemente 12, 13 alternativ oder zusätzlich zur Sicherung des Zwischenbodenelements 10 in der Verstauposition an der Seitenwand 5 dienen.

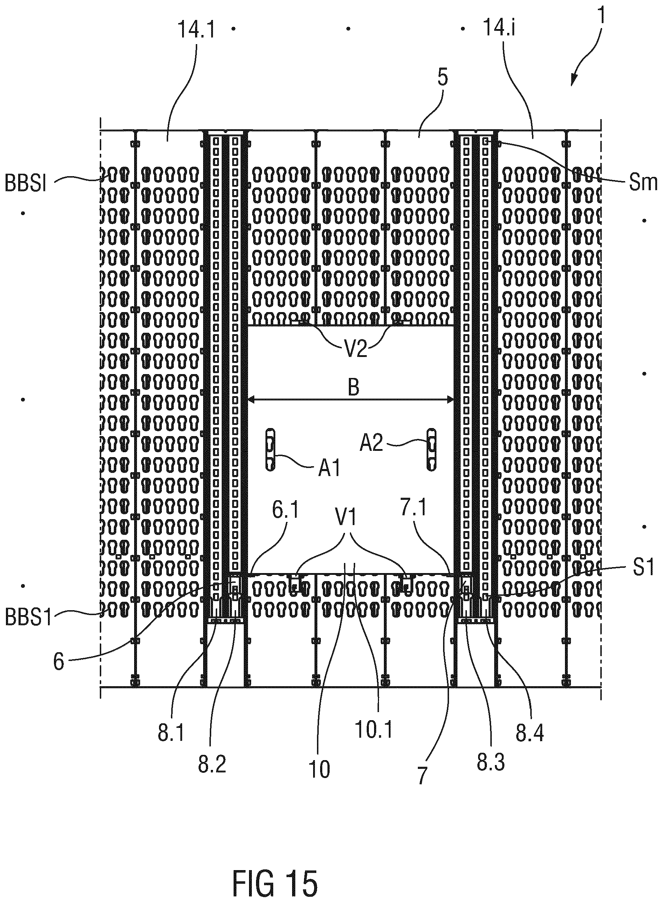

**Figur 15** zeigt eine Draufsicht eines Ausschnitts eines Fahrzeugaufbaus 1. Im Unterschied zu dem in den Figuren 2 bis 5 dargestellten Ausführungsbeispiel sind an der Seitenwand 5 und in nicht näher dargestellter Weise auch an der gegenüberliegenden Seitenwand 4 zwischen den Befestigungsschienen 8.1 bis 8.n anstatt der Längs-Befestigungsschienen 9.1 bis 9.z Befestigungswände 14.1 bis 14.i angeordnet, beispielsweise so genannte Schlüssellochbleche. Diese ermöglichen eine hinsichtlich der Position besonders flexible Befestigung des zumindest einen Zwischenbodenelements 10 unter Ausbildung der Seitenwand-Schwenkachse. Zu diesem Zweck umfassen die Befestigungswände 14.1 bis 14.i entsprechende Befestigungsstrukturen BBS1 bis BBSl, beispielsweise in Form von so genannten Schlüssellöchern.

### BEZUGSZEICHENLISTE

- 1: Fahrzeugaufbau
- 2: Ladeboden
- 3: Stirnwand
- 4: Seitenwand
- 5: Seitenwand
- 6: Querträger
- 6.1: Befestigungsstruktur
- 7: Querträger
- 7.1: Befestigungsstruktur
- 8.1 bis 8.n: Befestigungsschiene
- 9.1 bis 9.z: Längs-Befestigungsschiene
- 10: Zwischenbodenelement
- 10.1: Zwischenbodenelement-Teil
- 10.2: Zwischenbodenelement-Teil
- 11: Befestigungselement
- 12: Befestigungselement
- 13: Befestigungselement
- 14.1 bis 14.i: Befestigungswand
- A1 bis A4: Materialaussparung
- B: Breite
- BBS1 bis BBSl: Befestigungsstruktur
- BS1 bis BSx: Befestigungsstruktur
- R: Laderaum
- S1 bis Sm: Befestigungsstruktur
- V1, V2: Schwenk-Befestigungsvorrichtung

## Patentansprüche

1. Fahrzeugaufbau (1), insbesondere für ein Nutzfahrzeug, aufweisend
- zumindest einen Ladeboden (2),
- eine senkrecht zu dem Ladeboden (2) verlaufende erste Seitenwand (4),
- eine senkrecht zu dem Ladeboden (2) verlaufende und der ersten Seitenwand (4) gegenüberliegende zweite Seitenwand (5),
- zumindest jeweils zwei an jeder Seitenwand (4, 5) angeordnete, zumindest im Wesentlichen parallel zueinander verlaufende und von einer Ladefläche des Ladebodens (2) zumindest im Wesentlichen senkrecht nach oben gerichtete Befestigungsschienen (8.1 bis 8.n),
- zumindest zwei Querträger (6, 7), welche jeweils derart an einem Ende mit einer an der ersten Seitenwand (4) angeordneten Befestigungsschiene (8.1 bis 8.n) und an dem gegenüberliegenden anderen Ende mit einer an der zweiten Seitenwand (5) angeordneten Befestigungsschiene (8.1 bis 8.n) befestigbar oder befestigt sind, dass die Querträger (6, 7) parallel zueinander angeordnet sind, und
- zumindest ein Zwischenbodenelement (10), welches derart an den zumindest zwei Querträgern (6, 7) befestigbar oder befestigt ist, dass dieses beabstandet zu dem Ladeboden (2) und zumindest im Wesentlichen parallel zu diesem zwischen den beiden Seitenwänden (4, 5) verläuft.

2. Fahrzeugaufbau (1) nach Anspruch 1, wobei das zumindest eine Zwischenbodenelement (10) einteilig ausgebildet ist.

3. Fahrzeugaufbau (1) nach Anspruch 2, wobei
- das zumindest eine Zwischenbodenelement (10) an einem Ende zumindest eine Schwenk-Befestigungsvorrichtung (V1) aufweist, mittels welcher dieses um eine parallel zum Ladeboden (2) verlaufende Seitenwand-Schwenkachse schwenkbar an der ersten Seitenwand (4) oder der zweiten Seitenwand (5) und/oder zwei nebeneinander angeordneten Befestigungsschienen (8.1 bis 8.n) befestigt oder befestigbar ist, und
- das zumindest eine Zwischenbodenelement (10) ausgehend von einer Verstauposition, in welcher dieses mit seiner Oberseite zur jeweiligen Seitenwand (4, 5), an welcher dieses befestigt ist, gerichtet und zumindest im Wesentlichen parallel angeordnet ist, in eine Nutzposition, in welcher dieses mit seiner Unterseite zumindest abschnittsweise auf den Querträgern (6, 7) aufliegt, um die Seitenwand-Schwenkachse nach unten schwenkbar ist.

4. Fahrzeugaufbau (1) nach Anspruch 1, wobei das zumindest eine Zwischenbodenelement (10) mehrteilig, mehrere Zwischenbodenelement-Teile (10.1, 10.2) aufweisend, ausgebildet ist.

5. Fahrzeugaufbau (1) nach Anspruch 4, wobei
- ein erstes Zwischenbodenelement-Teil (10.1) an einem Ende zumindest eine Schwenk-Befestigungsvorrichtung (V1) aufweist, mittels welcher dieses um eine parallel zum Ladeboden (2) verlaufende Seitenwand-Schwenkachse schwenkbar an der ersten Seitenwand (4) und/oder zwei nebeneinander angeordneten Befestigungsschienen (8.1 bis 8.n) befestigt oder befestigbar ist,
- ein zweites Zwischenbodenelement-Teil (10.2) an einem Ende zumindest eine Schwenk-Befestigungsvorrichtung (V1) aufweist, mittels welcher dieses um eine parallel zum Ladeboden (2) verlaufende Seitenwand-Schwenkachse schwenkbar an der zweiten Seitenwand (5) und/oder zwei nebeneinander angeordneten Befestigungsschienen (8.1 bis 8.n) befestigt oder befestigbar ist, und
- beide Zwischenbodenelement-Teile (10.1, 10.2) jeweils ausgehend von einer Verstauposition, in welcher diese mit ihrer Oberseite zur jeweils zugehörigen Seitenwand (4, 5) gerichtet und zumindest im Wesentlichen parallel angeordnet sind, in eine Nutzposition, in welcher diese mit ihrer Unterseite zumindest abschnittsweise auf den Querträgern (6, 7) aufliegen, um die Seitenwand-Schwenkachse nach unten schwenkbar sind.

6. Fahrzeugaufbau (1) nach Anspruch 4, wobei
- ein erstes Zwischenbodenelement-Teil (10.1) an einem ersten Ende zumindest eine Schwenk-Befestigungsvorrichtung (V1) aufweist, mittels welcher dieses um eine parallel zum Ladeboden (2) verlaufende Seitenwand-Schwenkachse schwenkbar an der ersten Seitenwand (4) oder der zweiten Seitenwand (5) und/oder zwei nebeneinander angeordneten
Befestigungsschienen (8.1 bis 8.n) befestigt oder befestigbar ist,
- ein zweites Zwischenbodenelement-Teil (10.2) an einem Ende mittels einer Schwenk-Befestigungsvorrichtung (V2) um eine parallel zum Ladeboden (2) verlaufende Schwenkachse schwenkbar an einem dem ersten Ende gegenüberliegenden zweiten Ende des ersten Zwischenbodenelement-Teils (10.1) befestigt ist,
- das erste Zwischenbodenelement-Teil (10.1) in einer Verstauposition mit seiner Oberseite zur ersten Seitenwand (4) bzw. zweiten Seitenwand (5) gerichtet und zumindest im Wesentlichen parallel verlaufend angeordnet ist,
- das zweite Zwischenbodenelement-Teil (10.2) in der Verstauposition mit seiner Unterseite zur Unterseite des ersten Zwischenbodenelement-Teils (10.1) gerichtet und zumindest im Wesentlichen parallel verlaufend angeordnet ist,
- bei einer Überführung der Zwischenbodenelement-Teile (10.1, 10.2) von der Verstauposition in eine Nutzposition das erste Zwischenbodenelement-Teil (10.1) um die Seitenwand-Schwenkachse derart nach unten schwenkbar ist und das zweite Zwischenbodenelement-Teil (10.2) um die Schwenkachse von dem ersten Zwischenbodenelement-Teil (10.1) derart nach oben schwenkbar ist, dass beide Zwischenbodenelement-Teile (10.1, 10.2) mit ihrer Unterseite zumindest abschnittsweise auf den Querträgern (6, 7) aufliegen.

7. Fahrzeugaufbau (1) nach einem der vorhergehenden Ansprüche, wobei eine sich in die gleiche Richtung wie die Längsrichtung des Ladebodens (2) erstreckende Breite (B) des zumindest einen Zwischenbodenelements (10) geringer als ein Abstand zwischen zwei unmittelbar benachbart an einer Seitenwand (4, 5) angeordneten Befestigungsschienen (8.1 bis 8.n) ist, an welchen die beiden zur Befestigung des zumindest einen Zwischenbodenelements (10) vorgesehenen Querträger (6, 7) befestigt sind.

8. Fahrzeugaufbau (1) nach einem der vorhergehenden Ansprüche, wobei an den zur Befestigung des zumindest einen Zwischenbodenelements (10) unmittelbar benachbart angeordneten oder anordbaren Querträgern (6, 7) jeweils eine dem jeweils anderen Querträger (6, 7) zugewandte und zur zumindest abschnittsweisen Auflage einer Unterseite des zumindest einen Zwischenbodenelements (10) ausgebildete Befestigungsstruktur (6.1, 7.1) angeordnet ist.

9. Fahrzeugaufbau (1) nach Anspruch 8, wobei ein Abstand einer zur Auflage des zumindest einen Zwischenbodenelements (10) ausgebildeten Oberseite der jeweiligen Befestigungsstruktur (6.1, 7.1) zu einer Oberseite des zugehörigen Querträgers (6, 7) einer Dicke des zumindest einen Zwischenbodenelements (10) entspricht oder größer als diese ist.

10. Fahrzeugaufbau (1) nach einem der vorhergehenden Ansprüche, wobei das zumindest eine Zwischenbodenelement (10) eine flächige Struktur aufweist, welche insbesondere zumindest ein Gitter, zumindest ein Lochblech, zumindest eine Platte und/oder mehrere Quer- und/oder Längsstreben aufweist.

11. Fahrzeugaufbau (1) nach einem der vorhergehenden Ansprüche, wobei die Befestigungsschienen (8.1 bis 8.n) jeweils mehrere in Längsrichtung der jeweiligen Befestigungsschiene (8.1 bis 8.n) übereinander angeordnete Befestigungsstrukturen (S1 bis Sm) aufweisen, wobei jede Befestigungsstruktur (S1 bis Sm) zur Befestigung eines Endes eines Querträgers (6, 7) ausgebildet ist.

12. Fahrzeugaufbau (1) nach einem der vorhergehenden Ansprüche, wobei die Seitenwände (4, 5) jeweils eine mechanisch flexible und biegeelastische Plane und mehrere ausgehend vom Ladeboden (2) zumindest im Wesentlichen senkrecht nach oben geführte Rungen aufweisen, wobei die Befestigungsschienen (8.1 bis 8.n) jeweils an einer Runge angeordnet sind.

13. Fahrzeugaufbau (1) nach einem Ansprüche 1 bis 11, wobei Seitenwände (4, 5) jeweils zumindest ein flächiges und mechanisch starr ausgebildetes Wandelement aufweisen und die Befestigungsschienen (8.1 bis 8.n) jeweils unmittelbar an dem zumindest einen Wandelement und/oder an einem mit dem zumindest einen Wandelement mechanisch gekoppelten Rahmen angeordnet sind.

14. Fahrzeugaufbau (1) nach einem der vorhergehenden Ansprüche, wobei
- das zumindest eine Zwischenbodenelement (10) zumindest eine sich von einer Oberseite zu einer Unterseite des Zwischenbodenelements (10) erstreckende Materialaussparung (A1 bis A4) aufweist und
- die zumindest eine Materialaussparung (A1 bis A4) in einer Verstauposition des zumindest einen Zwischenbodenelements (10), in welcher dieses mit seiner Oberseite oder Unterseite zur ersten Seitenwand (4) bzw. zweiten Seitenwand (5) gerichtet und zumindest im Wesentlichen parallel verlaufend angeordnet ist, derart vor einer zwischen dem zumindest einen Zwischenbodenelement (10) und der entsprechenden Seitenwand (4, 5), zu welchem die Oberseite oder Unterseite gerichtet ist, angeordneten Befestigungsstruktur (BS1 bis BSx) angeordnet ist, dass die Befestigungsstruktur (BS1 bis BSx) durch die zumindest eine Materialaussparung (A1 bis A4) zugänglich ist.

15. Fahrzeug, insbesondere Nutzfahrzeug, aufweisend zumindest einen Fahrzeugaufbau (1) nach einem der vorhergehenden Ansprüche.
